# FASCICULE DE BREVET EUROPEEN

(11) **EP 0 927 145 B1**
(45) Date de publication et mention de la délivrance du brevet: **19.11.2003**
(21) Numéro de dépôt: 98932248.2
(22) Date de dépôt: 22.06.1998
(51) Int. Cl.: C03C 25/10

(54) **PROCEDE DE FABRICATION D'UN CONDUCTEUR OPTIQUE**
VERFAHREN ZUR HERSTELLUNG EINES OPTISCHEN LEITERS
METHOD FOR MAKING AN OPTICAL CONDUCTOR

(30) Priorité: 26.06.1997 FR 9708012
(43) Date de publication de la demande: 07.07.1999
(73) Titulaire: ALCATEL, 75008 Paris (FR)
(72) Inventeur: YANG, Micha[l, Conover, NC 28613 (US); McNUTT, Christopher, Hickory, NC 28602 (US); BENZEL, David, F-62100 Calais (FR)
(74) Mandataire: Korakis-Ménager, Sophie
(86) Numéro de dépôt international: FR9801301
(87) Numéro de publication internationale: WO99000337

(56) Documents cités:
- EP-A- 0 440 178
- EP-A- 0 646 552
- GB-A- 2 155 357
- PATENT ABSTRACTS OF JAPAN vol. 013, no. 293 (C-615), 6 juillet 1989 & JP 01 087536 A (SUMITOMO ELECTRIC IND LTD), 31 mars 1989
- DATABASE WPI Section Ch, Week 8909 Derwent Publications Ltd., London, GB; Class A82, AN 89-065968 XP002061112 & JP 01 018948 A (SUMITOMO ELECTRIC IND CO), 23 janvier 1989

## Description

L'invention est relative à un procédé de fabrication d'un conducteur optique. Elle concerne plus particulièrement le durcissement aux rayonnements ultraviolets des revêtements de fibres optiques.

Un conducteur optique pour la transmission de données comporte une fibre en verre d'un diamètre d'environ une centaine de microns, typiquement 125 µm, et au moins un revêtement protecteur formé en général de deux couches isolantes. Le revêtement protecteur est lui-même recouvert par une couche colorante destinée à coder ou reconnaître la fibre. Le diamètre externe d'un tel conducteur est compris entre 245 et 250 µm.

Plusieurs conducteurs optiques peuvent être associés en parallèle pour former un ruban. Dans ce cas, on prévoit un enrobage pour maintenir ensemble les conducteurs.

Les revêtements et l'enrobage sont constitués de polymères réticulables au rayonnement ultraviolet.

En pratique pour réaliser le revêtement d'un conducteur on entoure les fibres d'une couche de polymère liquide et ce matériau est solidifié par exposition au rayonnement ultraviolet. La fabrication des deux premières couches de protection peut s'effectuer soit en série, c'est-à-dire que l'on fabrique d'abord la première couche et ensuite la seconde, soit en parallèle, les deux couches étant déposées simultanément et durcies ensemble. Par contre le revêtement de coloration et le revêtement d'enrobage, pour former un ruban, sont actuellement réalisés en série, les uns après les autres.

Pour effectuer la réticulation on introduit des éléments photo-initiateurs dans le matériau à polymériser. L'exposition au rayonnement ultraviolet provoque, grâce à ces photo-initiateurs, une réaction chimique de polymérisation qui entraîne le durcissement du matériau. Le matériau à polymériser est par exemple un acrylate.

L'exposition au rayonnement ultraviolet s'effectue habituellement à l'aide de deux lampes à arc. Une première lampe produit un rayonnement dont les longueurs d'ondes les plus intenses sont comprises entre 350 et 400 nm environ. Cette lampe effectue principalement une réticulation en volume. Une seconde lampe à arc émet un rayonnement ultraviolet riche en longueurs d'ondes plus courtes, de l'ordre de 300 nm. Cette seconde lampe effectue surtout une réticulation en surface.

Ces lampes à arc dégagent des quantités importantes de chaleur. Il est donc nécessaire de les refroidir. Il est également nécessaire de refroidir le conducteur optique en cours de fabrication car, à la suite d'une première exposition au rayonnement ultraviolet, le revêtement est porté à une température élevée, comprise entre 100°C et 1000°C, et la réticulation ne s'effectue pas correctement à température élevée. Toutefois, la diminution de température que l'on peut obtenir est relativement limitée, notamment parce que les conducteurs optiques doivent être fabriqués rapidement, le plus souvent à des vitesses dépassant 100 m/min. Dans ces conditions la quantité de matériau photo-initiateur à utiliser est supérieure à celle qui serait nécessaire si la température était proche de la température ambiante.

L'invention remédie à ces inconvénients.

Le procédé selon l'invention est caractérisé en ce que pour réticuler un revêtement de conducteur optique défilant à une vitesse d'au moins 10 m/min, de préférence supérieure à 100 m/min, on prévoit une source de rayonnement UV monochromatique ou quasi monochromatique telle qu'un laser ou une lampe excimer, qui émet un rayonnement UV permettant d'effectuer principalement une réticulation en surface, et une lampe à arc permettant d'effectuer principalement une réticulation en volume.

De préférence, la source monochromatique ou quasi monochromatique précède la lampe à arc.

Après exposition au rayonnement UV monochromatique ou quasi monochromatique, la température du produit réticulé est peu différente de la température ambiante ; il n'est donc pas nécessaire de prévoir de moyens de refroidissement. En outre le réticulation est sensiblement plus efficace car le produit est à une température optimale pour cette réticulation.

Il est à noter que l'on a déjà proposé l'utilisation d'une source monochromatique ou quasi monochromatique pour la réticulation. Mais on a constaté que l'utilisation isolée d'une telle source monochromatique ne permettait pas une réticulation complète.

Ainsi l'invention, qui se rapporte à l'utilisation combinée d'une source monochromatique ou quasi monochromatique, et d'une lampe à arc, permet une réticulation complète avec un minimum de matériau photo-initiateur. En outre, le procédé n'entraîne pas de complication sensible de l'installation de fabrication.

Par ailleurs, on a constaté qu'on obtenait de meilleurs résultats en prévoyant, avant la lampe à arc, deux sources monochromatiques ou quasi monochromatiques à des longueurs d'ondes différentes pour effectuer la réticulation en surface. Le rôle de la seconde source monochromatique est de contribuer à la réticulation en volume, la lampe à arc terminant cette réticulation.

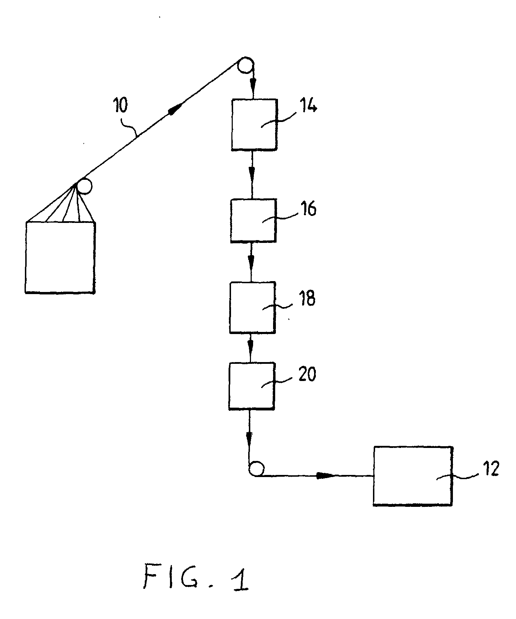

D'autres caractéristiques et avantages de l'invention, apparaîtront avec la description de certains de ses modes de réalisation, celle-ci étant effectuée en se référant à la figure unique qui est un schéma d'une installation conforme à l'invention.

L'installation représentée sur la figure unique est, pour l'essentiel, une installation classique de fabrication de conducteurs optiques ou de rubans.

Elle comporte des moyens pour entraîner, à une vitesse de 100 à 300 m/min, les fibres 10, ou faisceaux de fibres, vers un dispositif 12 de réception des conducteurs ou rubans fabriqués.

En amont du dispositif 12 se trouve tout d'abord un poste 14 d'application de résine sur les fibres ou rubans.

Conformément à l'invention, à l'aval du poste 14, on prévoit un premier poste 16 d'exposition au rayonnement ultraviolet comprenant une lampe excimer dont la longueur d'onde est de 222 nm. Avec un rayonnement à cette longueur d'onde on effectue une réticulation partielle en volume et en surface.

A la suite du poste 16 est prévu un poste 18 d'exposition à un rayonnement UV monochromatique. Ce poste 18 comprend une lampe excimer dont la longueur d'onde est de 308 nm. Ce poste 18 complète la réticulation en surface qui est effectuée au poste 16.

Après la lampe 18 se trouve un poste 20 qui comporte une lampe à arc émettant des longueurs d'ondes UV plus importantes que celles émises par les lampes excimer. Cette lampe à arc permet de compléter la réticulation en volume.

Les lampes excimers des postes 16 et 18 sont à basse température et de type tubulaire. Les fibres enduites de résine se déplacent à l'intérieur des tubes, selon l'axe de ces derniers.

La lampe du poste 20 est, dans l'exemple, une lampe à vapeur de mercure à moyenne pression.

La résine utilisée est un acrylate, un polyuréthane, un oligomère ou un monomère.

Pour plus de précision sur la résine utilisée on pourra se reporter par exemple au brevet US 4,844,604.

Bien que le procédé décrit s'applique à toutes les résines et tous les photo-initiateurs utilisés habituellement pour la fabrication de conducteurs ou rubans optiques, il est préférable de sélectionner ces matériaux pour obtenir un résultat optimum. Par "résultat optimum", on entend que la réticulation est complète, ou pratiquement complète, après un seul passage dans l'installation représentée sur la figure.

En particulier on choisira les photo-initiateurs de façon telle qu'ils présentent une efficacité maximale aux longueurs d'ondes des lampes excimers utilisées.

De façon plus précise le photo-initiateur devra présenter une coefficient d'extinction de 10⁴ ou plus à la longueur d'onde de la (ou les) lampe(s) excimer(s).

De façon en soi connue, le coefficient d'extinction est calculé dans une solution de méthanol MeOH à la température ambiante. Il s'exprime en ml.gr⁻¹.cm⁻¹.

Si on utilise une lampe excimer émettant un rayonnement ultraviolet à 308 nm on a constaté que les photo-initiateurs de références Irgacure 369 et Irgacure 907 de la société CIBA-GEIGY présentent un coefficient d'extinction approprié. En particulier, le photo-initiateur Irgacure 907 a un coefficient d'extinction de 1,4.10⁵ à 308 nm, tandis que le photo-initiateur Irgacure 369 présente un coefficient d'extinction de 4,3.10⁴ à la même longueur d'onde.

Par ailleurs, le photo-initiateur doit présenter une solubilité suffisante, supérieure à 3%, dans la résine utilisée, bien entendu avant sa réticulation.

On utilise par exemple en tant que résine un matériau comprenant 30 à 98% en poids d'acrylate d'uréthanne, 0,2 à 40% en poids de monomère d'acrylate, 0,05 à 10% en poids de photo-initiateur et 0,05 à 10% en poids de stabilisateur. On détermine la solubilité du photo-initiateur en ajoutant ce matériau, à l'état solide, dans le monomère d'acrylate se trouvant à l'état liquide. La solubilité est mesurée après mélange et chauffage dans un bain d'eau chaude à température comprise entre 50 et 60°C, puis refroidissement à température ambiante pendant 24 heures.

Bien que l'on ait mentionné plus haut la nécessité d'utiliser une lampe à arc pour effectuer la réticulation en volume il faut comprendre qu'avec les lampes excimers la réticulation en volume n'est pas complète, mais, bien entendu, que cette réticulation en volume n'est pas nulle. Cette réticulation dépend aussi du photo-initiateur utilisé. En particulier, avec le photo-initiateur Irgacure 369 on obtient une meilleure réticulation en volume qu'avec le matériau Irgacure 907.

Au cours d'essais effectués dans le cadre de l'invention, on a constaté que les meilleurs résultats étaient obtenus avec, comme résine, le produit de la société DSM ayant la référence C932 et, comme photo-initiateurs, les matériaux mentionnés ci-dessus à savoir les produits Irgacure 369 et 907 de la société CIBA-GEIGY.

On notera aussi qu'on obtient avec le procédé selon l'invention, et de préférence les résines et photo-initiateurs mentionnés ci-dessus, une réticulation correcte même pour des résines contenant des pigments à base d'oxyde de titane TiO₂, généralement présent dans les pigments de couleurs blanche, grise, jaune ou orange et qui sont connus pour absorber les rayonnements UV et rendre la réticulation plus difficile.

## Revendications

1. Procédé de fabrication d'un conducteur optique, ou d'un ruban de conducteurs optiques, dans lequel on expose au rayonnement ultraviolet (UV) un mélange d'une résine et d'un photo-initiateur afin de former, par réticulation, le revêtement du conducteur optique ou le matériau d'assemblage de plusieurs conducteurs, la réticulation s'effectuant par défilement, à une vitesse d'au moins 10 m/min, du conducteur (10), ou du faisceau de conducteurs, devant une source ultraviolet,
**caractérisé en ce qu'**on utilise, d'une part, une première source émettant un rayonnement UV monochromatique, ou quasi monochromatique, pour effectuer principalement une réticulation en surface et, d'autre part, une seconde source UV à spectre large comprenant des longueurs d'ondes plus élevées que la longueur d'onde de la source monochromatique, de façon à effectuer une réticulation principalement en volume.

2. Procédé selon la revendication 1, **caractérisé en ce que** pour la source UV monochromatique, ou quasi monochromatique, on utilise une lampe excimer, de préférence à basse température.

3. Procédé selon la revendication 2, **caractérisé en ce qu'**on utilise une lampe excimer de type tubulaire à l'intérieur de laquelle circule le conducteur ou ruban à réticuler.

4. Procédé selon l'une quelconque des revendications précédentes, **caractérisé en ce que** la longueur d'onde de la source monochromatique, ou quasi monochromatique, est de l'ordre de 308 nm ou 222 nm.

5. Procédé selon l'une quelconque des revendications précédentes, **caractérisé en ce qu'**on utilise deux sources monochromatiques ou quasi monochromatiques disposées l'une après l'autre, avant ladite source UV a spectrum large.

6. Procédé selon l'une quelconque des revendications précédentes, **caractérisé en ce qu'**on utilise une lampe à arc en tant que source ultraviolet à spectre large effectuant principalement la réticulation en volume.

7. Procédé selon la revendication 6, **caractérisé en ce que** la lampe à arc est une lampe à vapeur de mercure à moyenne pression.

8. Procédé selon la revendication 1, **caractérisé en ce que** l'exposition au rayonnement ultraviolet à spectre large s'effectue sans refroidissement du conducteur ou faisceau de conducteurs en cours de fabrication.

9. Procédé selon l'une quelconque des revendications précédentes, **caractérisé en ce que** la vitesse de défilement du conducteur ou ruban à fabriquer est d'au moins de l'ordre de 100 m/min.

10. Procédé selon la revendication 9, **caractérisé en ce que** la vitesse de défilement d'un conducteur est de l'ordre de 300 m/min.

## Patentansprüche

1. Verfahren zur Herstellung eines optischen Leiters oder eines Bandes optischer Leiter. in dem eine Mischung aus einem Harz und einem Photoinitiator ultravioletter Strahlung (UV) ausgesetzt wird, um durch Vernetzung den Überzug des optischen Leiters oder das Montagematerial für mehrere Leiter zu bilden, wobei die Vernetzung durch Vorbeiziehen des Leiters (10) oder des Leiterbündels vor einer ultravioletten Quelle mit einer Geschwindigkeit von mindestens 10 m/Min. erfolgt,
**dadurch gekennzeichnet, dass** einerseits eine erste Quelle verwendet wird, die eine monochromatische oder quasimonochromatische UV-Strahlung ausstrahlt, um hauptsächlich eine Flächenvernetzung durchzuführen, und andererseits eine zweite UV-Quelle mit breitem Spektrum verwendet wird, die höhere Wellenlängen als die Wellenlänge der monochromatischen Quelle besitzt, um hauptsächlich eine Volumenvernetzung durchzuführen.

2. Verfahren nach Anspruch 1, **dadurch gekennzeichnet, dass** für die monochromatische oder quasimonochromatische UV-Quelle eine Excimer-Lampe, vorzugsweise mit niedriger Temperatur, verwendet wird.

3. Verfahren nach Anspruch 2, **dadurch gekennzeichnet, dass** eine Excimer-Lampe nach Art einer Leuchtröhre verwendet wird, in deren innerem der zu vernetzende Leiter oder das zu vernetzende Band zirkuliert.

4. Verfahren nach einem der vorhergehenden Ansprüche, **dadurch gekennzeichnet, dass** die Wellenlänge der monochromatischen oder quasimonochromatischen Quelle in der Größenordnung von 308 nm oder 222 nm liegt.

5. Verfahren nach einem der vorhergehenden Ansprüche, **dadurch gekennzeichnet, dass** vor der genannten UV-Quelle mit breitem Spektrum zwei monochromatische oder quasimonochromatische Quellen verwendet werden, die hintereinander angeordnet sind.

6. Verfahren nach einem der vorhergehenden Ansprüche, **dadurch gekennzeichnet, dass** eine Bogenlampe als ultraviolette Quelle mit breitem Spektrum verwendet wird, die hauptsächlich die Volumenvernetzung durchführt.

7. Verfahren nach Anspruch 6, **dadurch gekennzeichnet, dass** es sich bei der Bogenlampe um eine Quecksilbermitteldrucklampe handelt.

8. Verfahren nach Anspruch 1, **dadurch gekennzeichnet, dass** die Exposition gegenüber der ultravioletten Strahlung mit breitem Spektrum ohne Kühlung des Leiters oder Leiterbündels, der bzw. das sich in der Herstellung befindet, erfolgt.

9. Verfahren nach einem der vorhergehenden Ansprüche, **dadurch gekennzeichnet, dass** die Geschwindigkeit, mit der der herzustellende Leiter oder das herzustellende Band vorbeizieht, mindestens in der Größenordnung von 100 m/Min. liegt.

10. Verfahren nach Anspruch 9, **dadurch gekennzeichnet, dass** die Geschwindigkeit, mit der ein Leiter vorbeizieht, in der Größenordnung von 300 m/Min. liegt.

## Claims

1. A method of manufacturing an optical conductor or a ribbon of optical conductors, in which method, a mixture of a resin and of a photo-initiator is exposed to ultraviolet (UV) radiation in order to form, by cross-linking, the covering of the optical conductor or the material for assembling together a plurality of conductors, cross-linking taking place by causing the conductor (10) or bundle of conductors to advance past an ultraviolet source at a speed of at least 10 meters per minute (m/min);
said method being **characterized in that**, use is made firstly of a first source emitting monochromatic or quasi-monochromatic UV radiation to achieve cross-linking mainly on the surface, and secondly a second UV source emitting UV radiation of broad spectrum containing wavelengths that are longer than the wavelength of the monochromatic source to achieve cross-linking mainly in depth.

2. A method according to claim 1, **characterized in that** a preferably low temperature excimer lamp is used for the monochromatic or quasi-monochromatic UV source.

3. A method according to claim 2, **characterized in that** a tubular-type excimer lamp is used through which the conductor or ribbon to be cross-linked advances.

4. A method according to any preceding claim, **characterized in that** the wavelength of the monochromatic or quasi-monochromatic source is about 308 nm or 222 nm.

5. A method according to any preceding claim, **characterized in that** two monochromatic or quasi-monochromatic sources are used one after the other before said broad-spectrum UV source.

6. A method according to any preceding claim, **characterized in that** an arc lamp is used as the broad-spectrum ultraviolet source performing mainly the cross-linking in depth.

7. A method according to claim 6, **characterized in that** the arc lamp is a low-pressure mercury vapor lamp.

8. A method according to claim 1, **characterized in that** the exposure to the broad-spectrum ultraviolet radiation is performed without cooling the conductor or bundle of conductors being manufactured.

9. A method according to any preceding claim, **characterized in that** the speed of advance of the conductor or ribbon to be manufactured is at least about 100 m/min.

10. A method according to claim 9, **characterized in that** the speed of advance of a conductor is about 300 m/min.
